(19) Europäisches Patentamt
European Patent Office
Office européen des brevets

(11) **EP 2 470 291 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(21) Anmeldenummer: **10744927.4**

(22) Anmeldetag: **17.08.2010**

(51) Int Cl.:
**B01D 63/02** *(2006.01)*    **B01D 63/04** *(2006.01)*
**A61M 1/16** *(2006.01)*

(86) Internationale Anmeldenummer:
**PCT/EP2010/061988**

(87) Internationale Veröffentlichungsnummer:
**WO 2011/023605 (03.03.2011 Gazette 2011/09)**

(54) **DREIDIMENSIONAL GEFLOCHTENES HOHLFASERMODUL FÜR STOFF- UND ENERGIEAUSTAUSCHVORGÄNGE**

THREE-DIMENSIONALLY BRAIDED HOLLOW FIBER MODULE FOR MASS AND ENERGY TRANSFER OPERATIONS

MODULE DE FIBRES CREUSES TRESSÉES TRIDIMENSIONNELLES POUR ÉCHANGES DE MATIÈRE ET D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.08.2009 DE 102009038673**

(43) Veröffentlichungstag der Anmeldung:
**04.07.2012 Patentblatt 2012/27**

(73) Patentinhaber: **Dritte Patentportfolio Beteiligungsgesellschaft mbH & Co. KG
12529 Schönefeld (DE)**

(72) Erfinder: **KASHEFI, Ali
52047 Aachen (DE)**

(74) Vertreter: **Zech, Stefan Markus et al
Meissner, Bolte & Partner GbR
Postfach 86 06 24
81633 München (DE)**

(56) Entgegenhaltungen:
**EP-A1- 1 941 919      EP-A2- 1 360 984
CA-A1- 1 094 462      DE-A1- 2 426 591
JP-A- 2 002 833      US-A- 5 174 900**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Hohlfaserbündel zur Aufnahme in einer Stoffaustauschvorrichtung gemäß dem Oberbegriff von Patentanspruch 1 sowie eine Stoffaustauschvorrichtung zur Aufnahme mindestens eines solchen Hohlfaserbündels sowie ein Verfahren zur Herstellung eines Hohlfaserbündels zur Aufnahme in einer Stoffaustauschvorrichtung gemäß dem Oberbegriff von Patentanspruch 11.

Der Einsatzbereich von Stoffaustauschvorrichtungen reicht von allgemeinen industriellen Anwendungen der Chemie oder etwa der Physik bis zu Anwendungen der Medizintechnik. Stoffaustauschvorrichtungen im erfindungsgemäßen Sinne betreffen einen Austausch eines Stoffes, welcher in gasförmiger oder auch in flüssiger Phase vorliegen kann, zwischen einer ersten Phase und einer von dieser durch eine durchlässige Membran getrennten zweiten Phase. Hierbei erfolgt der Stoffaustausch aufgrund eines Konzentrations- bzw. Druckgefälles zwischen der ersten und der zweiten Phase. Je nach ausgetauschtem Stoff oder Stoffen bzw. je nach Phase, in welchen diese Stoffe vorliegen, erfordert die Ausgestaltung der Membran grundlegende technische Voraussetzungen, um einen gewünschten Stoffaustausch gewährleisten zu können.

Obwohl sich die vorliegende Erfindung nicht nur auf medizintechnische Anwendungen beschränkt, soll dennoch im Folgenden hauptsächlich von einer medizintechnischen Anwendung ausgegangen werden, anhand welcher wesentliche Erfindungsprinzipen erklärt werden.

In medizintechnischen Anwendungen zum Stoffaustausch steht meist die Ausscheidung von gesundheitsschädlichen Stoffen bzw. die Übertragung von gesundheitsfördernden bzw. lebenserhaltenden Stoffen aus bzw. in den Körper des Patienten im Vordergrund. So ist es etwa ein Anliegen der Hämo-Dialyse, das Blut eines Patienten von gesundheitsgefährdenden Abbau- bzw. Giftstoffen zu reinigen. Im Falle von Oxygenatoren steht einerseits die Versorgung des Blutes eines Patienten mit ausreichend Sauerstoff im Vordergrund, andererseits soll auch die Reinigung des Blutes von erzeugtem Kohlendioxid erreicht werden. Weitere typische Stoffaustauschvorrichtungen der Medizintechnik können beispielsweise zur Plasmaseparation (Bluttrennung) oder auch in Hybridorganen, wie der künstlichen Leber, realisiert sein.

Soll ein Stoffaustausch zwischen dem Blut eines Patienten und einer weiteren Austauschphase, wie etwa einem Gasgemisch mit Sauerstoff, erfolgen, ist sicherzustellen, dass das Blut des Patienten ausreichend behandelt wird, d.h. der Stoffaustausch ausreichend abläuft. Bei Oxygenatoren ist folglich darauf zu achten, dass ausreichend Sauerstoff aus der Austauschphase über die Membran in das Blut des Patienten eingebracht wird. Ebenso ist zu berücksichtigen, dass das angefallene Kohlendioxid in ausreichender Menge aus dem Blut des Patienten entfernt wird. Je nach Stoffaustauschmenge können Oxygenatoren etwa lediglich zur Unterstützung der natürlichen Lungenfunktion bzw. zu deren vollständigen Ersetzung verwendet werden. Hierbei ist es beispielsweise möglich, Oxygenatoren extern wie intern in dem Blutkreislauf eines Patienten vorzusehen, um die Lungenfunktion des Patienten während eines chirurgischen Eingriffes zu ersetzen.

Je nach Anforderungen weisen die erforderlichen Membranen spezifische Materialeigenschaften und Geometrien auf, um den gewünschten Stoffaustausch zu erlauben. Viele moderne Stoffaustauschvorrichtungen der Medizintechnik verwenden Membranhohlfasern, deren Faserwände eine vorbestimmte Durchlässigkeit für einen auszutauschenden Stoff aufweisen. Derartige Membranen können aus geeigneten polymeren Kunststoffen sowie polymerem Polypropylen oder polymerem Polymethylpentene oder auch aus Silikon bestehen. Hierbei werden gemäß dem Stande der Technik eine Vielzahl an parallel ausgerichteten Hohlfasern typischerweise zu einer Matte zusammengefasst, um eine größere Gesamtaustauschfläche zu erhalten. Derartige Matten können in einfacher bzw. auch in mehrfacher Lage verwendet werden. Bei einer Lage aus einer Mehrzahl an Matten wird normalerweise die Einhaltung bestimmter Divergenzwinkel der Längserstreckungsachsen der Hohlfasern unterschiedlicher Matten zueinander vorgesehen, um ein Ineinanderrutschen einzelner Holfasern zu verhindern. In einem Oxygenator sind diese Lagen an Matten dann im Wesentlichen in Form eines Hohlzylinders angeordnet, um so dass Blut, welches in radialer Richtung dieses Zylinders fließt, beim Passieren einzelner Hohlfasern einem Stoffaustausch zu unterwerfen. Stellvertretend für diese in der Medizintechnik weit verbreitete Technik sei auf die Patentschrift EP 0 621 047 B1 hingewiesen, in welcher die bezeichneten Hohlfasern in zweilagigen, kreuzgewickelten Hohlfasermatten vorliegen, welche jeweils eine Vielzahl von parallel angeordneten Hohlfasern aufweisen. Die Hohlfasern einer Hohlfasermatte sind hierbei mit parallelen Ketten senkrecht zur Längserstreckungsachse der einzelnen Hohlfasern einer Hohlfasermatte zusammengenäht, um die relative Bewegung der einzelnen Hohlfasern zueinander zu begrenzen. Die Ausrichtung der Hohlfasern der ersten Hohlfasermatte zu denen der zweiten Hohlfasermatte erfolgt beispielsweise unter einem Winkel von 22°. Weiter werden die einzelnen Hohlfasermatten ggf. übereinander gelegt und zu einem Bündel aufgerollt, wobei die Enden der Hohlfasern mithilfe eines Harzes in ein Rohr eingebettet werden, um sie so zu verankern.

Zu bekannten Hohlfaseranordnungen wird im Übrigen hingewiesen auf die Druckschriften EP 1 360 984 A2, JP 2002833 A, DE 24 26 591 A1 und CA 1 094 462 A1, die alle zweidimensionale Hohlfaseranordnungen beschreiben, deren Fasern teilweise auch als verdrillte Stränge ausgeführt sein können.

Abgesehen von den geometrischen Limitierungen haben die Stoffaustauschvorrichtungen typischerweise auch ein Spektrum an Leistungsanforderungen zu erfüllen, welche sich aus Sicherheitsaspekten hinsichtlich der Patientenversorgung sowie auch aus medizinischen Überlegungen ergeben. Hierbei sind etwa das Blutfüllvolumen ebenso zu beachten wie ein Druckabfall auf der Seite der Austauschphase (etwa einem Gas mit Sauerstoff in einem Oxygenator) wie auch auf der blutseitigen Phase, die Scherbelastung von Blutzellen, sowie auch Eigenschaften der Membranoberflächen und Oberflächeneffekte bei Wechselwirkung mit Blut. Um die Vielzahl an Einflüssen zu berücksichtigen, werden in der Medizintechnik stets Lösungen vorgeschlagen, welche eine Verbesserung in der Erfüllung bestimmter Anforderungen auf Kosten einer Verschlechterung in der Erfüllung anderer Anforderungen erreichen. Ein für die Effizienz und damit für die Menge des ausgetauschten Stoffes in einer Stoffaustauschvorrichtung wichtiger Parameter sind zudem auch die lokalen Temperaturen als auch die lokalen Temperaturunterschiede zwischen der Blutphase und der Austauschphase. So weisen moderne Oxygenatoren beispielsweise auch integrierte Wärmetauscher auf, welche etwa durch Verwendung wärmeleitfähiger Materialien in plattenförmiger Bauweise die Temperaturunterschiede innerhalb der Stoffaustauschvorrichtung während des Stoffaustausches weitgehend ausgleichen sollen.

Um den Stoffaustausch in Stoffaustauschvorrichtungen, insbesondere den Sauerstoffaustausch in Oxygenatoren verbessern zu können, kann die folgende Gleichung 1 zur mathematischen Beschreibung der Gastransferrate im Oxygenator betrachtet werden.

$$dV/dt = K \cdot A \cdot \Delta p_{ln} \quad (1)$$

Hierbei bezeichnet *dV/dt* die Gastransferrate zwischen der gasförmigen Austauschphase innerhalb der Hohlfasern und der Blutphase außerhalb der Hohlfasern. Die Gastransferrate *dV/dt* berechnet sich hierbei als Produkt eines Stoffdurchgangskoeffizienten (K), der Größe der Membranoberfläche (A) sowie dem logarithmischen Mittelwert des Gaspartialdruckes ($\Delta P_{ln}$), welcher die Triebkraft des Stoffaustausches darstellt. Der Stoffdurchgangskoeffizient K lässt sich als eine hier nicht weiter ausgeführte Funktion einzelner Stoffübergangskoeffizienten für das betreffende Gas in der Gasphase, Membran und Blutphase beschreiben.

Aus obiger Gleichung wird ersichtlich, dass theoretisch zahlreiche Maßnahmen zu einer Verbesserung des Stoffaustausches in der Stoffaustauschvorrichtung vorgenommen werden können. Hierbei zeigt sich jedoch in der technischen Praxis, dass viele Maßnahmen zur Optimierung eines Parameters mit der Verschlechterung eines anderen Parameters einhergehen. Insbesondere bei der Verwendung von Hohlfasern in Stoffaustauschvorrichtungen haben sich die technischen Anstrengungen vornehmlich auf eine Optimierung der Gehäuseform der Stoffaustauschvorrichtungen, der Positionierung einzelner Hohlfasern in dem Gehäuse sowie die Strömungsbeeinflussung der Blutphase in der Stoffaustauschvorrichtung konzentriert. Trotz dieser Anstrengungen zeigen sich bei vielen aus dem Stand der Technik bekannten Stoffaustauschvorrichtungen jedoch gravierende Nachteile, welche einen verminderten Stoffaustausch verursachen. Hierzu zählen beispielsweise die Randgängigkeit der Blutphase zwischen der inneren Wandung des Gehäuses und den außen liegenden Hohlfasern, Kanalbildungen, Kurzschlussströmungen sowie Todzonen, welche alle einen deutlich vermindernden Stoffaustausch zwischen der Austauschphase in den Hohlfasern und der Blutphase zur Folge haben.

Gerade bei der Anordnung einer Vielzahl von Hohlfasern zu einer Hohlfasermatte bzw. einer Vielzahl solcher Matten zu einem Hohlfaserbündel lassen sich die oben beschriebenen Phänomene besonders dann nachweisen, wenn die Hohlfasermatten bzw. Hohlfaserbündel um einen zentral angeordneten Zylinder in der Stoffaustauschvorrichtung gewickelt sind. Hierbei entstehen nicht nur Kurzschlussströmungen von radial strömendem Blut, welches praktisch ohne mit einer Hohlfaser in wechselwirkenden Stoffaustausch zu treten aus dem Inneren des Zylinders direkt zu dessen Innenwandung strömen kann. Weiter entstehen bei derartigen Konfigurationen mitunter große Randgängigkeiten zwischen Hohlfasermatte und der Innenwandung des Zylinders, wodurch der gewünschte Stoffaustausch stark vermindert wird.

Entsprechend der oben dargestellten Nachteile darf es somit als notwendig erkannt werden, eine Anordnung von Hohlfasern bzw. ein Hohlfaserbündel vorzuschlagen, welches zur Aufnahme in einer Stoffaustauschvorrichtung vorgesehen ist, welches die oben beschriebenen Nachteile vermindert, die zu einem reduzierten Stoffaustausch in der Stoffaustauschvorrichtung Anlass geben. Insbesondere ist es Aufgabe der vorliegenden Erfindung, ein Hohlfaserbündel vorzuschlagen, welches einen verbesserten Stoffaustausch bei Aufnahme in einer Stoffaustauschvorrichtung erlaubt. Weiterhin ist es Aufgabe der vorliegenden Erfindung eine entsprechende Stoffaustauschvorrichtung zur Aufnahme mindestens eines Hohlfaserbündels sowie ein Verfahren zur Herstellung eines derartigen Hohlfaserbündels vorzuschlagen.

Erfindungsgemäß wird diese Aufgabe durch ein Hohlfaserbündel zur Aufnahme in einer Stoffaustauschvorrichtung gemäß Patentanspruch 1 gelöst. Weiterhin wird die Aufgabe durch eine Stoffaustauschvorrichtung gemäß Patentanspruch 10 sowie ein Verfahren zur Herstellung eines Hohlfaserbündels zur Aufnahme in einer Stoffaustauschvorrichtung gemäß Patentanspruch 11 gelöst.

Insbesondere wird die Aufgabe durch ein Hohlfaserbündel zur Aufnahme in einer Stoffaustauschvorrichtung gelöst, welche sich dadurch auszeichnet, dass das Hohlfaserbündel drei Gruppen von im Wesentlichen wenigstens lokal entlang einer Vorzugsrichtung ausgerichteten Hohlfittersträngen für einen Stoffaustausch und/oder Wärmeaustausch umfasst, welche in Bezug auf ihre lokale Vorzugsrichtungen so zueinander angeordnet sind, dass eine erste Gruppe von Hohlfitterträngen in eine im Wesentlichen erste Vorzugsrichtung weist, eine zweite Gruppe von Hohlfitterträngen in eine im Wesentlichen zweite Vorzugsrichtung weist und eine dritte Gruppe von Hohlfitterträngen in eine im Wesentlichen dritte Vorzugsrichtung weist, wobei die drei Vorzugsrichtungen voneinander unabhängig und im Wesentlichen zueinander senkrecht sind.

Überdies wird die Aufgabe durch eine Stoffaustauschvorrichtung zur Aufnahme mindestens eines Hohlfitterbündels gelöst, wobei mindestens ein Hohlfitterbündel entsprechend einem erfindungsgemäßen Hohlfitterbündel ausgebildet ist.

Ein wesentlicher Gedanke der Erfindung liegt darin, eine Vielzahl an Hohlfitterträngen in einem Hohlfitterbündel vorzusehen, wobei unterschiedliche Hohlfitterstränge unterschiedliche Vorzugsrichtungen im Raum aufweisen, so dass ein dreidimensionales Gebilde entsteht. Hohlfaserstränge im erfindungsgemäßen Sinne können sowohl einzelne Hohlfittern als auch eine Mehrzahl an Hohlfittern sein. Die Vorzugsrichtung der Hohlfitterstränge definiert sich im Falle einzelner Hohlfittern durch die Längserstreckungsrichtung der Hohlfittern, und im Falle eines Hohlfitterstranges mit einer Mehrzahl an Hohlfittern durch die im Wesentlichen mittlere Längserstreckungsrichtung des Stranges. Demgemäß sind die Hohlfittern stets so miteinander verbunden, dass eine Vorzugsrichtung definierbar ist.

Da zudem einzelne Hohlfittern wie auch Hohlfitterstränge in dem Hohlfitterbündel mitunter Biegungen aufweisen können, ist das Hohlfitterbündel durch eine dreidimensionale Struktur gekennzeichnet, welche wenigstens lokal Hohlfittern bzw. Hohlfitterstränge umfasst, die drei voneinander unabhängige Raumrichtungen aufweisen. Die Unabhängigkeit einzelner Vorzugsrichtungen ist vorliegend im mathematischen Sinne zu verstehen, so dass aus drei Hohlfittern bzw. Hohlfitterträngen mit unabhängigen Vorzugsrichtungen eine dreidimensionale Struktur gebildet wird. Hier und im Weiteren wird eine unabhängige Vorzugsrichtung mit einer unterschiedlichen Vorzugsrichtung gleichgestellt.

Durch die dreidimensionale Anordnung von Hohlfitterträngen in dem Hohlfitterbündel kann folglich eine möglichst optimale Raumnutzung einerseits erreicht werden, andererseits kann auch ein geometrisches Hohlfittergerüst dargestellt werden, welches den dynamischen Fluss der an der äußeren Oberfläche der Hohlfitterwandungen vorbeiströmenden Phase konditioniert. So ist es beispielsweise in Oxygenatoren von entscheidender Wichtigkeit, dass die Blutphase wenigstens bereichsweise eine geeignete turbulente Strömung ausführt, wodurch einerseits der Kontakt mit den Oberflächen der Hohlfitterwandungen statistisch verbessert wird, und andererseits auch eine geeignete Durchmischung der Blutphase erfolgt. Insbesondere bei den aus dem Stand der Technik bekannten Hohlfittermatten, welche lokal meist nur eine zweidimensionale Struktur bzw. eine Struktur mit nur zwei Vorzugsrichtungen definieren, ist der Grad der Turbulenzbildung in der Blutphase oftmals nur sehr gering.

Ein weiterer Hauptgedanke der vorliegenden Erfindung liegt ferner darin, einen Hohlfitterstrang durch Verflechten mehrerer Hohlfittern miteinander darzustellen, wodurch einerseits eine selbst stabilisierende Struktur ausgebildet wird, und andererseits diese Struktur eine Oberflächentopografie aufweist, welche aufgrund der Verschlingungen der einzelnen Hohlfittern miteinander (Verflechtungen) wiederum lokal zu einer Verbesserung des turbulenten Flusses der an der Oberfläche des Hohlfitterstranges vorbei bewegende Phase erreicht. Weiterhin stellen sich einzelne Hohlfitterstränge aus mehreren Hohlfittern als überaus geeignet dar, größere Hohlfitterbündel durch Verbinden bzw. Bündelung in modularem Aufbau darzustellen.

Vorangehend wie auch im Nachfolgenden ist ein Verflechten einzelner Hohlfittern miteinander im Sinne eines Verschlingens einzelner Hohlfittern miteinander zu verstehen. Hierbei erfolgt jedoch das Verschlingen derart, dass die geflochtenen Hohlfittern eine stabile Struktur erzeugen, um somit einem selbständigen Lösen einzelner Hohlfittern aus dieser Struktur vorzubeugen. Weiterhin sei darauf hingewiesen, dass ein Verflechten einzelner Hohlfittern wenigstens zwei Hohlfittern aufweist, welche zueinander nicht im rechten Winkel geführt sind. Damit unterscheidet sich ein Verflechten grundlegend von einem Verweben oder Verkreuzen, in welchem die Hohlfittern im Wesentlichen in zwei miteinander verkreuzt verschlungenen Gruppen an Hohlfittern vorliegen. Folglich ist es auch nachvollziehbar, dass ein Verflechten aufgrund der relativ geringen Einschränkung hinsichtlich der Anordnung einzelner Hohlfitterstränge bzw. Hohlfittern zueinander ein weitaus größeres geometrisches Spektrum an Darstellungsmöglichkeiten von Hohlfitterbündeln erlaubt.

In einer bevorzugten Ausführungsform zeichnet sich das Hohlfitterbündel dadurch aus, dass wenigstens einer der Hohlfitterstränge aus einer Mehrzahl an Hohlfittern besteht. Da die mechanische Stabilität eines Hohlfitterstranges aus einer Mehrzahl an Hohlfittern im Vergleich zu einzelnen Hohlfittern verbessert ist, resultiert auch eine Verbesserung der mechanischen Stabilität des gesamten Hohlfitterbündels. Insbesondere tritt diese Verbesserung dann ein, wenn die Mehrzahl an Hohlfittern aneinander fixiert ist, um so ein Verrutschen einzelner Hohlfittern gegeneinander zu vermindern. Eine derartige Fixierung kann beispielsweise durch geeignete Verkettung mit Halteelementen oder Haltefäden erreicht werden, oder aber auch durch einfaches Verkleben miteinander. Anstelle von Halteelementen oder Halteflächen kann die Fixierung auch durch quer verlaufende weitere Hohlfittern erzielt werden.

In einer weiterführenden Ausführungsform der vorliegenden Erfindung ist vorgesehen, dass die mehreren Hohlfasern des wenigstens einen Hohlfaserstranges miteinander verflochten sind. Aufgrund des Verflechtens werden die Oberflächen der Hohlfasern so zueinander gerichtet, bzw. die Hohlfasern so miteinander verschlungen, dass ein Entgleiten bzw. Verrutschen einzelner Hohlfasern in einem Hohlfaserstrang nicht oder nur vermindert möglich ist. Demgemäß resultiert eine im Vergleich zu einer einzelnen Hohlfaser mechanisch stabilere Struktur. Weiterhin kann durch geeignetes Verflechten einzelner Hohlfasern miteinander die Gesamtoberfläche eines Hohlfaserstranges so konditioniert werden, dass auf den Strömungsfluss der mit der Oberfläche der Hohlfasern in Kontakt tretenden Phase vorteilhaft Einfluss genommen werden kann.

In einer weiteren Ausführungsform weist ein Hohlfaserbündel wenigstens einen Hohlfaserstrang für einen Stoffaustausch oder Stoff- und Wärmeaustausch auf, welcher weiter vorzugsweise selbst mehrere Hohlfasern aufweist, die miteinander verflochten sind. Im Falle eines Stoff- und Wärmeaustausches ist wenigstens eine Hohlfaser für einen Stoffaustausch und wenigstens eine Hohlfaser für einen Wärmetauscher vorgesehen.

In einer weiteren Ausführungsform des erfindungsgemäßen Hohlfaserbündels ist die Verflechtung der Hohlfasern so ausgeführt, dass sie sich gegenseitig stabilisieren. Demzufolge resultiert auch dann eine stabilere Struktur des Hohlfaserbündels, wenn wenigstens drei Gruppen an Hohlfasersträngen mit wenigstens lokal unterschiedlichen Vorzugsrichtungen miteinander verflochten sind. Das Verflechten erlaubt also das Hohlfaserbündel als Ganzes durch Anwenden geeigneter Flechttechniken darzustellen. Die mechanische Stabilisierung des Hohlfaserbündels stellt sich vor allem auch dann als notwendig heraus, wenn die mit der äußeren Oberfläche der Hohlfaser in Kontakt gelangende Phase bei Verwendung der Stoffaustauschvorrichtung auf diese einen Strömungsdruck ausübt. Ausführungsgemäß ist die aus der Verflechtung der Hohlfasern resultierende Stabilisierung ausreichend, um einem solchen Strömungsdruck standhalten zu können, ohne dass die Struktur des Hohlfaserbündels wesentlich verändert würde.

In einer weiteren Ausführungsform ist der wenigstens eine Hohlfaserstrang des Hohlfaserbündels in Bezug zu wenigstens einem weiteren Hohlfaserstrang für einen Stoffaustausch oder Stoff- und Wärmeaustausch mit mehreren Hohlfasern, die miteinander verflochten sind, in dem Hohlfaserbündel miteinander verbunden. Das Hohlfaserbündel kann folglich durch eine Anzahl an Hohlfasersträngen dargestellt werden, die ihrerseits wiederum aus einer Mehrzahl an Hohlfasern ausgeformt sind. Die Verbindung einzelner Hohlfaserstränge untereinander kann durch geeignete Vorrichtungen wie Verbindungsfäden bzw. Schlingen oder auch Verbindungselemente erfolgen. Weiterhin möglich ist ein Verbinden mittels Verkleben oder auch durch Verflechten miteinander.

Durch Anordnen einzelner Hohlfaserbündel mit unterschiedlichen Vorzugsrichtungen, ist folglich wiederum die relativ flexible Darstellung dreidimensionaler Strukturen eines Hohlfaserbündels besonders vorteilhaft möglich.

Erfindungsgemäß umfasst das Hohlfaserbündel genau drei Gruppen an Hohlfasersträngen, welche in jeweils eine Vorzugsrichtung weisen, die von den anderen Vorzugsrichtungen unabhängig ist. Somit lässt sich wiederum ein geeignetes Hohlfaserbündel gemäß vorgegebenen Abmessungen, etwa des Gehäuses einer Stoffaustauschvorrichtung darstellen.

Die genau drei Vorzugsrichtungen sind im Wesentlichen senkrecht zueinander angeordnet. Durch die senkrechte Anordnung zueinander lassen sich besonders stabile Strukturen eines Hohlfaserbündels darstellen, da die auftretenden Strömungskräfte in den Hohlfaserbündeln weitgehend gleich über alle drei Raumrichtungen verteilt werden können. Gerade auch bei Hohlfaserbündeln in welchen ein turbulenter Fluss wenigstens bereichsweise in einer der Phasen eingestellt wird, kann folglich eine geeignete Kräfteübertragung in alle Raumrichtungen erfolgen.

Fernerhin ist als Ausführungsform vorgesehen, dass die erste Gruppe an Hohlfasersträngen, die zweite Gruppe an Hohlfasersträngen und die dritte Gruppe an Hohlfasersträngen miteinander verflochten sind. Eine Verbindung mittels Verflechten ist einerseits relativ einfach darzustellen, und resultiert andererseits auch in einer stabilen Struktur des Hohlfaserbündels.

In einer Weiterführung ist die Verflechtung der ersten Gruppe an Hohlfasersträngen, der zweiten Gruppe an Hohlfasersträngen und der dritten Gruppe an Hohlfasersträngen so ausgeführt, dass eine selbsttragende, mechanisch belastbare Struktur resultiert. Die Belastbarkeit dieser Struktur ist wenigstens ausreichend, um dem in dem Hohlfaserbündel auftretenden Strömungsdruck standzuhalten.

Gemäß einer weiteren Ausführungsform der vorliegenden Erfindung bildet die Verflechtung eine hinsichtlich der Hohlfaserstränge regelmäßige Struktur aus. Eine regelmäßige Struktur ist insbesondere für eine gleichmäßige Durchmischung der mit der äußeren Oberfläche der Hohlfaser in Kontakt gelangenden Phase entscheidend. Demgemäß können bereichsweise unterschiedliche Stoffaustauscheffizienzen bzw. Stör- oder Todflüsse oder auch Todvolumina weitgehend vermieden oder aber vollständig verhindert werden. Vorzugsweise weist die regelmäßige Struktur eine Symmetrie auf, welche gegebenenfalls auch der Symmetrie der Gehäuseform der Stoffaustauschvorrichtung entsprechen kann.

Gemäß einer weiteren Ausführungsform des erfindungsgemäßen Hohlfaserbündels ist die erste Gruppe an Hohlfasersträngen und die zweite Gruppe an Hohlfasersträngen für einen Stoffaustausch vorgesehen und die dritte Gruppe an Hohlfasersträngen für einen Wärmeaustausch. Folglich können Temperaturgradienten innerhalb des Faserbündels auch lokal relativ gut ausgeglichen werden. Insbesondere kann für Stoffaustauschvorrichtungen, welche eine hohe Konstanz des Wärmeniveaus innerhalb des Hohlfaserbündels gewährleisten müssen - beispielsweise bei Oxygenatoren - Wärme im Wesentlichen in dem gesamten Volumen des Hohlfaserbündels zugeführt bzw. abgeführt werden. Demgemäß kann gewährleistet werden, dass die mit den äußeren Oberflächen der Hohlfasern in Kontakt tretende Phase über das Volumen des Hohlfaserbündels eine weitgehend konstante Temperatur aufweist. Durch Veränderung dieser Temperatur bei entsprechender Abfuhr bzw. Übertragung von Wärme kann auch die Stoffaustauschrate in dem Hohlfaserbündel geeignet eingestellt werden.

Weiterhin ist in einer Ausführungsform des erfindungsgemäßen Hohlfaserbündels vorgesehen, dass die erste Gruppe an Hohlfasersträngen und die zweite Gruppe an Hohlfasersträngen im Wesentlichen entlang der Vorzugsrichtung der dritten Gruppe an Hohlfasersträngen einen Kanal oder mehrere Kanäle ausbilden. Mittels der Kanäle lässt sich eine geeignete Strömungskonditionierung der Phase erreichen, die mit den äußeren Oberflächen der Hohlfasern in Kontakt gelangt. Folglich kann damit erneut gezielt auf die gesamte Stoffaustauschrate Einfluss genommen werden.

In einer anderen Ausführungsform des erfindungsgemäßen Hohlfaserbündels werden die Hohlfasern wenigstens eines Hohlfaserstranges wenigstens bereichsweise durch die Löcher einer oder mehrerer Lochscheiben positioniert. Hiermit können die Hohlfasern insbesondere endständig leicht an ein Fluidversorgungssystem angeschlossen werden, wobei sie in dem Bereich der Lochscheiben mechanisch fixiert werden. Die Lochscheiben sind hierbei angepasst, um einzelne Hohlfasern bzw. Hohlfaserstränge aus mehreren Hohlfasern aufzunehmen.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:

Fig. 1 eine schematische Schnittansicht durch eine Ausführungsform eines erfindungsgemäßen Hohlfaserbündels;

Fig. 2 eine schematische Schnittansicht durch eine weitere Ausführungsform eines erfindungsgemäßen Hohlfaserbündels;

Fig. 3 eine schematische Darstellung zur Anordnung von Hohlfasersträngen in einer sechseckigen Form gemäß einer weiteren Ausführungsform der vorliegenden Erfindung;

Fig. 4 eine mathematische Darstellung der Längsverteilung $S_l$ sowie der Porosität $\varepsilon$ eines Hohlfa-serbündels gemäß der in Fig. 3 angedeuteten Ausführungsform;

Fig. 5 eine beispielhafte Darstellung einer Ausführungsform eines erfindungsgemäßen Hohlfaserstranges bestehend aus drei Hohlfasern;

Fig. 6 eine beispielhafte Darstellung einer weiteren Ausführungsform eines erfindungsgemäßen Hohlfaserstranges;

Fig. 7 eine beispielhafte Darstellung einer weiteren Ausführungsform eines erfindungsgemäßen Hohlfaserstranges;

Fig. 8 eine Seitenschnittansicht durch eine Ausführungsform einer Stoffaustauschvorrichtung zur Aufnahme eines Hohlfaserbündels gemäß einer Ausführungsform der vorliegenden Erfindung.

In der nachfolgenden Beschreibung werden für gleiche und gleich wirkende Teile dieselben Bezugsziffern verwendet.

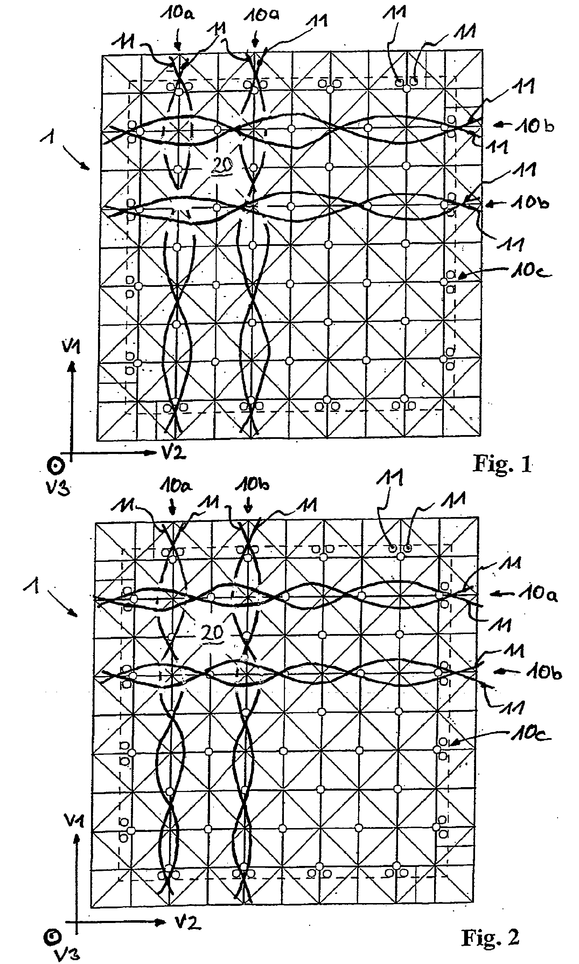

Fig. 1 zeigt eine schematische Schnittansicht durch eine erste Ausführungsform eines erfindungsgemäßen Hohlfaserbündels 1, welches insgesamt drei Gruppen von unterschiedlichen Hohlfasersträngen 10a, 10b und 10c aufweist, deren jeweilige Vorzugsrichtungen V1, V2 und V3 voneinander unabhängig sind. Insbesondere sind die Vorzugsrichtungen so angeordnet, dass die erste Gruppe an Hohlfasersträngen 10a die Vorzugsrichtung V1 aufweist, die zweite Gruppe an Hohlfasersträngen 10b die Vorzugsrichtung V2 aufweist und die dritte Gruppe an Hohlfasersträngen 10c die Vorzugsrichtung V3 aufweist. Zur deutlicheren Darstellung sind lediglich zwei Hohlfaserstränge 10a dargestellt, welche jeweils aus zwei Hohlfasern 11 ausgebildet sind, sowie zwei Hohlfaserstränge 10b, welche ebenfalls aus jeweils zwei Hohlfasern 11 ausgebildet sind. Hierbei sind die beiden Hohlfaserstränge 10a jeweils in einer Ebene angeordnet und die beiden Hohlfaserstränge 10b in einer unmittelbar darüber liegenden Ebene. Vorliegend sind die Ebenen nicht weiter mit Bezugsziffern versehen, jedoch lassen sich diese leicht aufgrund der grafischen Darstellungen nachvollziehen. Die Vorzugsrichtung V1 der ersten Gruppe an Hohlfasersträngen 10a und die Vorzugsrichtung V2 der zweiten Gruppe an Hohlfasersträngen 10b stehen hierbei senkrecht aufeinander. Die beiden Hohlfasern 11 eines jeden Hohlfaserstranges 10a bzw. 10b sind durch Verschlingen mit den Hohlfasersträngen 10c der dritten Gruppe an Hohlfasersträngen 10c verflochten. Die erste und zweite Gruppe an Hohlfasersträngen 10a und 10b erscheinen in der Darstellung der besseren Kenntlichkeit wegen dünner als die Hohlfasern 11 der dritten Gruppe an Hohlfasersträngen 10c. Alle Hohlfasern 11 der drei Gruppen an Hohlfasersträngen 10a, 10b und 10c können hierbei jedoch von identischem Außendurchmesser sein.

Hierbei weist die dritte Gruppe an Hohlfasersträngen 10c in der Schnittdarstellung randseitig des Hohlfaserbündels 1 jeweils drei Hohlfasern 11 auf, welche im in Fig. 1 dargestellten Querschnitt in dreieckiger Konfiguration zueinander angeordnet sind. Weitere Hohlfaserstränge 10c, gemäß der Schnittansicht in Fig. 1 im Inneren des Hohlfaserbündels 1 angeordnet, weisen lediglich eine Hohlfaser 11 auf und sind gemäß der dargestellten Schnittansicht so in Verlängerung eines der randseitigen Hohlfaserstränge 10c angeordnet, dass sie in der Papierebene in linearer Anordnung zueinander ausgefluchtet sind. So sind die bezeichneten innen liegenden Hohlfaserstränge 10c so angeordnet, dass jeweils drei Hohlfaserstränge 10c, bestehend aus jeweils einer Hohlfaser 11, zwischen zwei Hohlfasersträngen 10c angeordnet sind, welche jeweils drei Hohlfasern 11 umfassen. Damit ist es möglich, in einer zur Vorzugsrichtung V3 senkrecht angeordneten Ebene Hohlfasern 11 durch Verschlingen mit den einzelnen im Wesentli-chen parallel zueinander angeordneten Hohlfaserstrangen 10c zu verflechten. Hierbei wird zum Verschlingen einer Hohlfaser 11, beispielsweise der ersten Gruppe an Hohlfaserstrangen 10a, eine Hohlfaser zwischen zwei Hohlfasern 11 der im Hohlfaserbündel 1 seitlich angeordneten Hohlfaserstränge 10c geführt, um sich anschließend um die oben bezeichneten weiter innen liegenden Hohlfaserstränge 10c des Hohlfaserbündels 1 zu schlingen, und folglich mit diesen verflochten zu werden.

Die vorliegende Darstellung gibt eine schematische Sichtweise einer ersten möglichen Ausführungsform des erfindungsgemäßen Hohlfaserbündels 1 wider, wobei jedoch lediglich zwei Ebenen an Hohlfaserstran-gen 10a und 10b dargestellt sind. Zum besseren Verständnis weist die Darstellung gemäß Fig. 1 zudem zahlreiche Hilfslinien auf, welche es erlauben, die relative Anordnung der einzelnen Hohlfaserstränge 10c zueinander leichter zu erkennen. Gemäß der Ausführungsform der vorliegenden Erfindung sind jedoch lediglich die drei voneinander unterschiedlichen Gruppen an Hohlfa-serstrangen 10a, 10b und 10c physischer Teil des Hohlfaserbündels. Weiter ist dem Fachmann auch verständlich, dass eine beliebige Anzahl an Ebenen von Hohlfa-serstrangen 10a und 10b in alternierender Weise entlang der Vorzugsrichtung V3 durch Verschlingen mit den ein-zelnen Hohlfaserstrangen 10c angeordnet sein können. Folglich kann beispielsweise ein kubisches Hohlfaserbündel 1 ausgebildet sein, bzw. ein quaderförmiges, dessen Ausdehnung entlang der Vorzugsrichtung V3 durch die Längserstreckung der Hohlfaserstränge 10c definiert ist. Durch das Verflechten der Hohlfaserstränge 10a mit den Hohlfaserstrangen 10c bzw. durch das Verflechten der Hohlfaserstränge 10b mit den Hohlfaserstrangen 10c sowie durch die alternierende Abfolge dieser Anordnungen entlang der Vorzugsrichtung V3 entsteht ein mechanisch stabiles Hohlfaserbündel 1.

Vorzugsweise sind die Hohlfaserstränge 10c auch zum Wärmeaustausch in dem Hohlfaserbündel 1 vorgesehen, wohingegen die beiden Hohlfaserstränge der Gruppen an Hohlfaserstrangen 10a und 10b zum Stoffaustausch vorgesehen sind. Im Falle der Verwendung des Hohlfaserbündels 1 in einem Oxygenator würden folglich die erste und zweite Gruppe an Hohlfasersträngen 10a und 10b von Sauerstoff durchströmt sein, um diesen mit der Blutphase (vorliegend nicht gezeigt) auszutauschen. Weiterhin würde auch zwischen der Blutphase und der in den Hohlfasern 11 strömenden Gasphase ein Austausch an $CO_2$ ablaufen. Im Gegen-satz hierzu könnten die Hohlfaserstränge 10c der dritten Gruppe von einem Wärmeaustauschfluid durchströmt werden, welches eine weitgehend gleichmäßige Temperaturverteilung in dem Hohlfaserbündel 1 gewährleistet. Ausführungsgemäß können die Hohlfasern 11 der Hohlfaserstränge 10c den beiden Gruppen der Hohlfaserstränge 10a und 10b vergleichbar ausgeführt sein bzw. von diesen verschieden sein. Insbesondere ist darauf hinzuweisen, dass die einzelnen Hohlfasern 11 einen ty-pischen Innendurchmesser von 200 $\mu$m bis 280 $\mu$m und einen typischen Außendurchmesser von 300 $\mu$m bis 380 $\mu$m aufweisen können.

Um die einzelnen Gruppen an Hohlfaserstran-gen 10a, 10b und 10c mit dem jeweiligen Fluid zu füllen, können diese über Anschlussstücke, in welche sie beispielsweise verklebt oder versiegelt sind, von einem geeigneten Fluiddruck beaufschlagt werden. Demgemäß lässt sich auch ein definierter Fluss eines Fluids in den einzelnen Gruppen an Hohlfaserstrangen 10a, 10b und 10c gezielt einstellen.

Fig. 2 zeigt im Vergleich zur Fig. 1 eine weitere mögliche Ausführungsform eines erfindungsgemäßen Hohlfaserbündels 1 in Querschnittansicht. Hierbei bilden die einzelnen Hohlfaserstränge 10c, welche aus jeweils einer Hohlfaser 11 bestehen, der dritten Gruppe an Hohl-faserstrangen entlang der Vorzugsrichtung V3 im Querschnitt einen Flechtpunkt für die mit ihnen verschlungenen Hohlfasern 11 der ersten Gruppe an Hohlfaserstran-gen 10a und der zweiten Gruppe an Hohlfaserstrangen 10b. Der Flechtpunkt definiert im Wesentlichen den in der vorliegenden Querschnittansicht dargestellten Kreuzungspunkt zweier Hohlfasern 11, welche einen Hohlfaserstrang 10a oder 10b ausbilden. Hierzu im Vergleich müssen die Hohlfaserstränge 10c, welche aus jeweils einer Hohlfaser 11 gebildet sind, der in Fig. 1 gezeigten Ausführungsform keine Flechtpunkte darstellen. Vielmehr stellen lediglich zwei der drei Hohlfasern 11 einer Gruppe an Hohlfaserstrangen 10c einen Flechtpunkt dar. Je nach Flechtweise kann so eine dichtere bzw. auch fester geflochtene Struktur des Hohlfaserbündels 1 dar-gestellt werden. Insbesondere erlauben unterschiedli-che Flechtweisen eine unterschiedliche Porosität des Hohlfaserbündels 11 einzustellen, welches sich aus dem Verhältnis von freiem Volumen in dem Hohlfaserbündel 1 zu dem Gesamtvolumen des Hohlfaserbündels 1 ergibt.

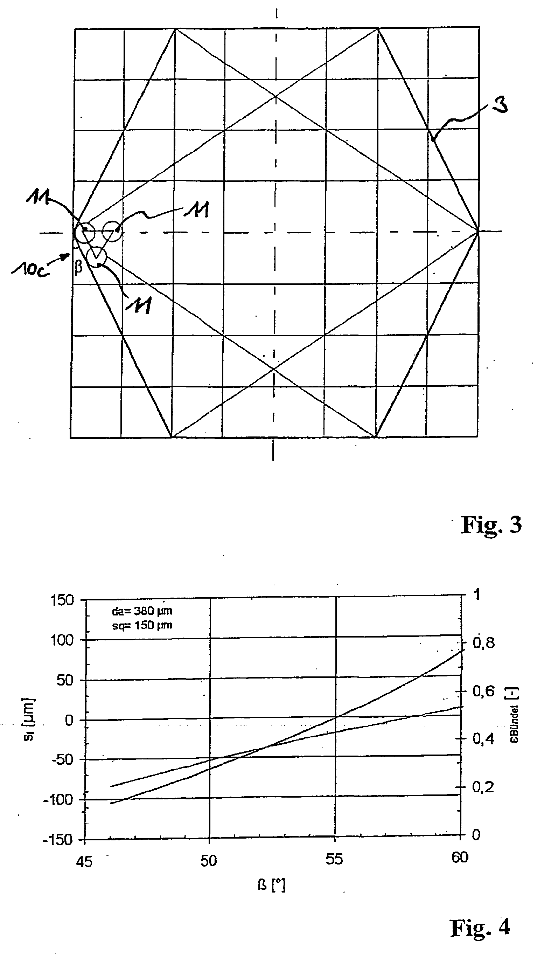

Fig. 3 zeigt eine schematische Querschnittansicht durch ein abstrahiertes Hohlfaserbündel 1 (vorliegend nicht dargestellt), welches zur Aufnahme in eine sechseckige Gehäuseform einer Stoffaustauschvorrichtung 2 (vorliegend nicht dargestellt) vorgesehen ist. Hierbei ist die in Fig. 3 dargestellte Querschnittansicht der in den Figuren 1 und 2 dargestellten Querschnittansicht vergleichbar. Die ersten und zweiten Gruppen an Hohlfasersträngen 10a und 10b sind in Fig. 3 jedoch nicht dargestellt. Die dritte Gruppe an Hohlfasersträngen 10c ist lediglich durch einen Hohlfaserstrang 10c schematisch dargestellt, welcher drei Hohlfasern 11 umfasst. Die Gehäuseform, welche vorliegend sechseckig ausgeführt ist, wird durch eine Umfangslinie des Gehäuses 3 wiedergegeben.

Ausführungsgemäß kann die Anordnung der drei Hohlfasern 11 des dargestellten Hohlfaserstranges 10c hinsichtlich des Neigungswinkels $\beta$ optimiert werden, um eine Verflechtung einzelner Hohlfasern 11 mit gewünschter Geometrie und Porosität des Hohlfaserbündels 1 darzustellen. Der Winkel $\beta$ definiert sich hierbei durch den Winkel zwischen der idealisierten seitlichen Begrenzungslinie des dargestellten quadratischen Bezugsmusters und der Verbindungslinie durch die jeweiligen Mittelpunkte der beiden dieser Begrenzungslinie am nächsten gelegenen Hohlfasern 11 des Hohlfaserstranges 10c. Dementsprechend kann in Abhängigkeit von der Anordnung der drei Hohlfasern 11 zueinander, d.h. auch in Abhängigkeit von dem dargestellten Winkel $\beta$, ein Hohlfaserbündel 1 mit vorgegebener Porosität erzeugt werden. Die Porosität kann auch in Abhängigkeit der Querverteilung $S_q$ und Längsverteilung $S_l$ der Hohlfasern 11 dargestellt werden. Die Längsverteilung $S_L$ definiert sich hierbei im Sinne des Abstandes zwischen zwei Hohlfasern in axialer Richtung (entlang der Längsausdehnung der Hohlfasern 11). Die Querverteilung $S_q$ ergibt sich aus dem Abstand zwischen zwei Hohlfasern 11 in radialer Richtung (senkrecht zur Längserstreckungsrichtung der Hohlfasern 11). Die Berechnung eines geeigneten Winkels $\beta$ erlaub hierbei einerseits die Randgängigkeit bei Einsatz des Hohlfaserbündels in eine Stoffaustauschvorrichtung 2 sowie auch den Grad der Umströmung der von dem Hohlfaserbündel 1 umfassten Hohlfasern zu bestimmen. Hierbei ist es wiederum verständlich, dass die Hohlfasern gruppenweise für unterschiedliche Aufgaben (Stoffaustausch, Wärmeaustausch) vorgesehen sein können.

Eine beispielhafte Berechnung der Längsverteilung $S_l$ sowie der Porosität $\varepsilon$ in Abhängigkeit des Winkels $\beta$ für die in Fig. 3 dargestellte Konfiguration lässt sich aus Fig. 4 entnehmen. Hierbei wurden die Parameter der Querverteilung $S_q$ auf 150 $\mu$m und der Außendurchmesser einer Hohlfaser 11 $d_a$ auf 380 $\mu$m festgesetzt. Die dargestellten Berechnungen verdeutlichen, dass bei Vergrößerung des Winkels $\beta$ sowohl die Längsverteilung $S_L$ als auch die Porosität $\varepsilon$ des Hohlfaserbündels 1 zunimmt. Entsprechend der beiden dargestellten Verläufe ist es nun möglich, für eine vorbestimmte Stoffaustauschvorrichtung 2, eine geeignete Längsverteilung $S_l$ sowie eine geeignete Porosität $\varepsilon$ des Hohlfaserbündels 1 einzustellen. Hierbei sei auch noch einmal darauf hingewiesen, dass die Porosität $\varepsilon$ sich als Verhältnis von freiem Volumen des Hohlfaserbündels 1 zu dem Gesamtvolumen des Hohlfaserbündels 1 ergibt.

Durch geeignete Anordnung, insbesondere durch schräge Anordnung der Hohlfasern 11 in der Stoffaustauschvorrichtung 2 kann gewährleistet werden, dass auch Kondenswasser, welches sich typischerweise in einer die Stoffaustauschvorrichtung 2 durchströmenden Gasphase bilden kann, abtropft. Dementsprechend kommt es zu keinen Blockierungen bzw. ungewünschten Reservoirbildungen.

Durch geeignetes Verflechten einzelner Hohlfasern 11 bzw. einzelner Hohlfaserstränge 10a, 10b oder 10c innerhalb eines Hohlfaserbündels 1 können nicht nur unterschiedliche Packungsgeometrien sondern auch unterschiedliche Porositäten eingestellt werden. Diese Eigenschaft zeigt sich insbesondere bei der Darstellung von Hohlfäserbündeln 1 zur Aufnahme in künstlichen Organen (Hybridorganen), wie beispielsweise in einer künstlichen Leber, als besonders bedeutungsvoll.

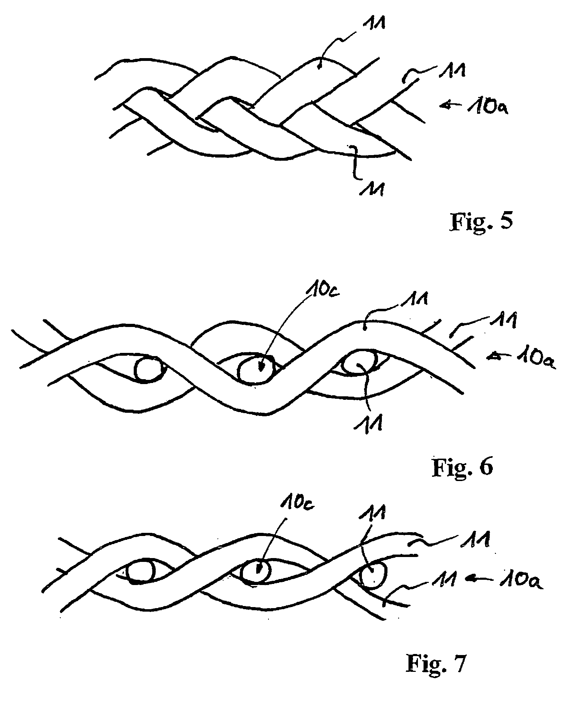

Fig. 5 zeigt eine mögliche Ausführungsform eines erfindungsgemäßen Hohlfaserstranges 10a, bestehend aus drei einzelnen Hohlfasern 11. Durch geeignetes Verflechten der drei Hohlfasern 11 miteinander lässt sich ein Hohlfaserstrang 10a darstellen, welcher im Vergleich zu den einzelnen Hohlfasern 11 eine verbesserte mechanische Stabilität aufweist. Zusätzlich weist der dargestellte Hohlfaserstrang 10a eine charakteristische Oberflächentopografie auf, welche den Fluss einer mit der Oberfläche der einzelnen Hohlfasern 11 in Kontakt stehende Phase hinsichtlich ihrer Strömung geeignet konditionieren kann. So ist insbesondere bei Oxygenatoren die Ausbildung von lokalen Turbulenzen erwünscht, um somit die statistische Kontaktwahrscheinlichkeit einzelner Blutbestandteile mit den Oberflächen der einzelnen Hohlfasern 11 zu erhöhen.

Fig. 6 zeigt eine im Vergleich zu Fig. 5 alternative Verflechtung einzelner Hohlfasern 11 auf, wobei jedoch in Fig. 6 zwei unterschiedliche Gruppen aufeinander senkrecht stehender Hohlfasersträngen 10a und 10c vorgesehen sind. Die Verflechtung einzelner Hohlfasern 11 des Hohlfaserstranges 10a kann hierbei in klar definierbaren Ebenen erfolgen oder aber auch derart, dass einzelne Hohlfasern 11 nicht in klar definierbaren Ebenen verlaufen. Eine derartige Ausführungsform ist beispielsweise in Fig. 7 dargestellt, in weicher lediglich die sich senkrecht zur Papierebene erstreckenden Hohlfasern 11 in einer klar definierbaren Ebene liegen, jedoch nicht die mit ihnen verschlungenen Hohlfasern 11 des Hohlfaserstranges 10a.

Je nach Anforderung kann somit durch geeignetes Verflechten einzelner Hohlfasern 11 bzw. Hohlfassersträngen 10a, 10b und 10c eine geeignete Bündelung in einem Hohlfaserbündel 1 erreicht werden. Die in den Figuren 5 bis 7 dargestellten Hohlfasersträngen 10a bzw. 10c sind hierbei typischerweise als Untereinheiten eines größeren Hohlfaserbündels 1 zu verstehen, welche sich durch Anordnung einer Vielzahl vergleichbarer Strukturen darstellen lassen. Dem Fachmann ist es darüber hinaus verständlich, dass alle weiteren Formen des Verflechtens, insbesondere unter Verwendung einer beliebigen Anzahl von Hohlfasern angewandt werden können.

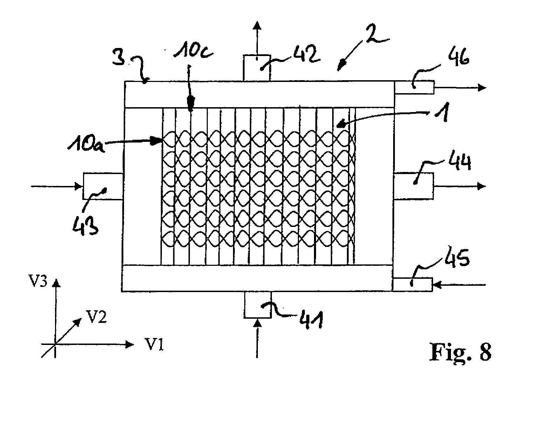

Fig. 8 zeigt eine seitliche Querschnittansicht einer Ausführungsform einer erfindungsgemäßen Stoffaustauschvorrichtung 2, in welcher eine Ausführungsform des erfindungsgemäßen Hohlfaserbündels 1 aufgenommen ist. Hierbei ist das Hohlfaserbündel 1 lediglich schematisch dargestellt. Insbesondere weist das Hohlfaserbündel 1 in der Darstellung lediglich eine erste Gruppe von Hohlfasersträngen 10a und eine dritte Gruppe von Hohlfasersträngen 10c auf. Eine zweite Gruppe von Hohlfasersträngen 10b kann in Vorzugsrichtung V2, senkrecht zur Papierebene, angeordnet sein.

Die Hohlfasern 11 des Hohlfaserbündels 1 sind über geeignete Anschlussstücke mit den erforderlichen Einlässen bzw. Auslässen der Stoffaustauschvorrichtung 2 verbunden. Insbesondere weist die Stoffaustauschvorrichtung 2 einen Einlass 41 eines Austauschmediums, im Falle eines Oxygenators einen Bluteinlass 41, über welchen das Austauschmedium senkrecht zur Vorzugsrichtung V1 der ersten Gruppe an Hohlfasersträngen 10a und senkrecht zur Vorzugsrichtung V2 der zweiten Gruppe an Hohlfasersträngen 10b in die Stoffaustauschvorrichtung 2 einströmt. Nach erfolgtem Durchströmen der Stoffaustauschvorrichtung 2 wird das Austauschmedium über einen Auslass 42, im Falle eines Oxygenators einen Blutauslass 42, ausgeleitet. Zur Versorgung der ersten Gruppe an Hohlfasersträngen 10a mit einer geeigneten Austauschphase ist ein Gaseinlass 43, im Falle eines Oxygenators ein $O_2$-Einlass 43, vorgesehen, durch weichen Sauerstoff in die Hohlfaserstränge 10a einströmen kann und nach erfolgtem Stoffaustausch und Durchströmen der Stoffaustauschvorrichtung 2 entlang der Vorzugsrichtung V1 aus einem Gasauslass 44, im Falle eines Oxygenators einen $O_2/CO_2$-Auslass 44, wieder aus der Stoffaustauschvorrichtung 2 ausgeleitet wird. Zur Versorgung der in Vorzugsrichtung V2 angeordneten zweiten Gruppen an Hohlfasersträngen 10b können weitere Einlässe bzw. Auslässe vorgesehen sein. Insbesondere kann eine beliebige Anzahl an Einlässen sowie Auslässen vorgesehen sein.

Die vorliegende Stoffaustauschvorrichtung 2 weist zusätzlich eine dritte Gruppe an Hohlfasersträngen 10c auf, welche zum Wärmeaustausch bzw. zur Wärmeregulierung vorgesehen sind. Hierbei sind die Hohlfaserstränge 10c mit geeigneten Anschlüssen versehen, über welche ein Wärmemedium ein- bzw. ausgeleitet werden kann. Entsprechend weist die vorliegende Ausführungsform einen Einlass 45 für ein Wärmemedium sowie einen Auslass 46 für ein Wärmemedium auf.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

Bezugzeichen:

1 Hohlfaserbündel
2 Stoffaustauschvorrichtung
3 Gehäuse

10a Hohlfaserstrang
10b Hohlfaserstrang
10c Hohlfaserstrang

11 Hohlfaser

20 Kanal

41 Einlass des Austauschmediums / Bluteinlass
42 Auslass des Austauschmediums / Blutauslass
43 Einlass der Austauschphase / Einlass $O_2$
44 Auslass der Austauschphase / Auslass $O_2/CO_2$
45 Einlass des Wärmemediums
46 Auslass des Wärmemediums

V1 Vorzugsrichtung
V2 Vorzugsrichtung
V3 Vorzugsrichtung

$\beta$ Neigungswinkel
$\varepsilon$ Porosität
$s_l$ Längsverteilung
$s_q$ Querverteilung
$d_a$ Außendurchmesser

**Patentansprüche**

1. Hohlfaserbündel zur Aufnahme in einer Stoffaustauschvorrichtung,
   **dadurch gekennzeichnet, dass**
   das Hohlfaserbündel (1) eine Vielzahl an im Wesentlichen wenigstens lokal entlang einer Vorzugsrichtung ausgerichteten Hohlfasersträngen (10a, 10b, 10c) für einen Stoffaustausch und optional Wärmeaustausch umfasst, welche in Bezug auf Ihre lokale Vorzugsrichtungen (V1, V2, V3) so zueinander angeordnet sind, dass mindestens eine erste Gruppe von Hohlfasersträngen (10a) in eine im Wesentlichen erste Vorzugsrichtung (V1) weist, mindestens eine zweite Gruppe von Hohlfasersträngen (10b) in eine im Wesentlichen zweite Vorzugsrichtung (V2) weist und mindestens eine dritte Gruppe von Hohlfasersträngen (10c) in eine im Wesentlichen dritte Vorzugsrichtung (V3) weist, wobei die drei Vorzugsrichtungen (V1, V2, V3) voneinander unabhängig sind, wobei das Hohlfaserbündel genau drei Gruppen an Hohlfasersträngen (10a, 10b, 10c) umfasst, welche in jeweils eine Vorzugsrichtung (V1, V2, V3) weisen, die von den anderen Vorzugsrichtungen (V1, V2, V3) unabhängig sind, **dadurch gekennzeichnet, dass** die genau drei Vorzugsrichtungen (V1, V2, V3) im Wesentlichen senkrecht zueinander angeordnet sind.

2. Hohlfaserbündel gemäß Anspruch 1, **dadurch gekennzeichnet, dass** wenigstens einer der Hohlfaserstränge (10a, 10b, 10c) aus einer Mehrzahl an Hohlfasern (11) besteht.

3. Hohlfaserbündel gemäß Anspruch 2, **dadurch gekennzeichnet, dass** die mehreren Hohlfasern (11) des wenigstens einen Hohlfaserstranges (10a, 10b, 10c) miteinander verflochten sind.

4. Hohlfaserbündel gemäß Anspruch 3, **dadurch gekennzeichnet, dass** der wenigstens eine Hohlfaserstrang (10a) in Bezug zu wenigstens einem weiteren Hohlfaserstrang (10b) für einen Stoffaustausch oder Stoff- und Wärmeaustausch mit mehreren Hohlfasern (11), die miteinander verflochten sind, in dem Hohlfaserbündel (1) miteinander verbunden ist.

5. Hohlfaserbündel gemäß einem der vorhergehenden Ansprüche, **dadurch gekennzeichnet, dass** die erste Gruppe an Hohlfasersträngen (10a), die zweite Gruppe an Hohlfasersträngen (10b) und die dritte Gruppe an Hohlfasersträngen (10c) miteinander verflochten sind.

6. Hohlfaserbündel gemäß einem der vorhergehenden Ansprüche 3 bis 5, **dadurch gekennzeichnet, dass** die Verflechtung eine hinsichtlich der Hohlfaserstränge (10a, 10b, 10c) regelmäßige Struktur ausbildet.

7. Hohlfaserbündel gemäß einem der vorhergehenden Ansprüche, **dadurch gekennzeichnet, dass** die erste Gruppe an Hohlfasersträngen (10a) und die zweite Gruppe an Hohlfasersträngen (10b) für einen Stoffaustausch vorgesehen sind und die dritte Gruppe an Hohlfasersträngen (10c) für einen Wärmeaustausch vorgesehen ist.

8. Hohlfaserbündel gemäß einem der vorhergehenden Ansprüche, **dadurch gekennzeichnet, dass** die erste Gruppe an Hohlfasersträngen (10a) und die zweite Gruppe an Hohlfasersträngen (10b) im Wesentlichen entlang der Vorzugsrichtung der dritten Gruppe an Hohlfasersträngen (10c) einen Kanal oder mehrerer Kanäle (20) ausbilden.

9. Hohlfaserbündel gemäß einem der vorhergehenden Ansprüche, **dadurch gekennzeichnet, dass** die Hohlfasern (11) wenigstens eines Hohlfaserstranges (10a, 10b, 10c) wenigstens bereichsweise durch die Löcher einer oder mehrerer Lochscheiben (31) positioniert sind.

10. Stoffaustauschvorrichtung mit mindestens einem Hohlfaserbündel, **dadurch gekennzeichnet, dass** mindestens ein Hohlfaserbündel (1) entsprechend einem der vorhergehenden Ansprüche ausgebildet ist.

11. Verfahren zur Herstellung eines Hohlfaserbündels (1) nach einem der vorangehenden Ansprüche, **gekennzeichnet durch** die folgenden Schritte:

- Bereitstellen mindestens einer Mehrzahl von Hohlfasern (11), die für einen Stoffoder Stoff- und Wärmeaustausch ausgebildet sind;
- Anordnen mindestens einer Mehrzahl dieser Hohlfasern (11) in wenigstens einem Hohlfaserstrang (10a, 10b, 10c) **durch** Verflechten.

**Claims**

1. A hollow fiber bundle for accommodation in a mass transfer device, **characterized in that** said hollow fiber bundle (1) comprises a plurality of hollow fiber strands (10a, 10b, 10c) for mass transfer and optionally heat transfer which are aligned at least locally essentially along a preferential direction, which are arranged with respect to one another in terms of their local preferential directions (V1, V2, V3) such that at least one first group of hollow fiber strands (10a) points essentially in a first preferential direction (V1), at least one second group of hollow fiber strands (10b) points essentially in a second preferential direction (V2), and at least one third group of hollow fiber strands (10c) points in a third preferential direction (V3), said three preferential directions (V1, V2, V3) being independent of one another, wherein the hollow fiber bundle includes exactly three groups of hollow fiber strands (10a, 10b, 10c) which each point in one preferential direction (V1, V2, V3) which are independent from the other preferential directions (V1, V2, V3), **characterized in that** the exactly three preferential directions (V1, V2, V3) are arranged essentially perpendicular to one another.

2. The hollow fiber bundle according to claim 1, **characterized in that** at least one of the hollow fiber strands (10a, 10b, 10c) consists of a plurality of hollow fibers (11).

3. The hollow fiber bundle according to claim 2, **characterized in that** the plurality of hollow fibers (11) of the at least one hollow fiber strand (10a, 10b, 10c) are interbraided.

4. The hollow fiber bundle according to claim 3, **characterized in that** the at least one hollow fiber strand (10a), in relation to at least one further hollow fiber strand (10b), for mass transfer or mass and heat transfer is interconnected within the hollow fiber bundle (1) to a plurality of interbraided hollow fibers (11).

5. The hollow fiber bundle according to any one of the preceding claims, **characterized in that** the first group of hollow fiber strands (10a), the second group of hollow fiber strands (10b), and the third group of hollow fiber strands (10c) are interbraided with one another.

6. The hollow fiber bundle according to any one of the preceding claims 3 to 5, **characterized in that** the interbraiding forms a regular structure with respect to the hollow fiber strands (10a, 10b, 10c).

7. The hollow fiber bundle according to any one of the preceding claims, **characterized in that** the first group of hollow fiber strands (10a) and the second group of hollow fiber strands (10b) are provided for mass transfer, and the third group of hollow fiber strands (10c) is provided for heat transfer.

8. The hollow fiber bundle according to any one of the preceding claims, **characterized in that** the first group of hollow fiber strands (10a) and the second group of hollow fiber strands (10b) form one channel or a plurality of channels (20) essentially along the preferential direction of the third group of hollow fiber strands (10c).

9. The hollow fiber bundle according to any one of the preceding claims, **characterized in that** the hollow fibers (11) of at least one hollow fiber strand (10a, 10b, 10c) are positioned at least in areas by the holes of one or more perforated discs (31).

10. A mass transfer device comprising at least one hollow fiber bundle, **characterized in that** at least one hollow fiber bundle (1) is formed according to any one of the preceding claims.

11. A method for manufacturing a hollow fiber bundle (1) according to any one of the preceding claims, **characterized by** the following steps:

    - providing at least one plurality of hollow fibers (11) configured for mass or mass and heat transfer;
    - arranging at least one plurality of said hollow fibers (11) in at least one hollow fiber strand (10a, 10b, 10c) by interbraiding.

**Revendications**

1. Faisceau de fibres creuses destiné à être logé dans un dispositif d'échange de matière, **caractérisé en ce que** le faisceau de fibres creuses (1) comprend une multitude d'écheveaux de fibres creuses (10a, 10b, 10c) orientés essentiellement au moins de manière locale le long d'une direction préférentielle pour un échange de matière et facultativement un échange de chaleur, lesquels sont agencés les uns par rapport aux autres relativement à leurs directions préférentielles locales (V1, V2, V3) de telle manière qu'au moins un premier groupe d'écheveaux de fibres creuses (10a) est orienté dans une essentiellement première direction préférentielle (V1), au moins un deuxième groupe d'écheveaux de fibres creuses (10b) est orienté dans une essentiellement deuxième direction préférentielle (V2) et au moins un troisième groupe d'écheveaux de fibres creuses (10c) est orienté dans une essentiellement troisième direction préférentielle (V3), les trois directions préférentielles (V1, V2, V3) étant indépendantes les unes des autres, le faisceau de fibres creuses comprenant exactement trois groupes d'écheveaux de fibres creuses (10a, 10b, 10c), lesquels sont orientés dans respectivement une direction préférentielle (V1, V2, V3) qui est indépendante des autres directions préférentielles (V1, V2, V3), **caractérisé en ce que** les exactement trois directions préférentielles (V1, V2, V3) sont disposées de manière essentiellement perpendiculaire les unes aux autres.

2. Faisceau de fibres creuses selon la revendication 1, **caractérisé en ce que** au moins un des écheveaux de fibres creuses (10a, 10b, 10c) est constitué d'une pluralité de fibres creuses (11).

3. Faisceau de fibres creuses selon la revendication 2,

**caractérisé en ce que**

les plusieurs fibres creuses (11) de l'au moins un écheveau de fibres creuses (10a, 10b, 10c) sont tressées les unes aux autres.

4. Faisceau de fibres creuses selon la revendication 3, **caractérisé en ce que**

l'au moins un écheveau de fibres creuses (10a) est relié, dans le faisceau de fibres creuses (1), relativement à au moins un autre écheveau de fibres creuses (10b), pour un échange de matière ou un échange de matière et de chaleur, à plusieurs fibres creuses (11) qui sont tressées les unes aux autres.

5. Faisceau de fibres creuses selon l'une des revendications précédentes,
**caractérisé en ce que**

le premier groupe d'écheveaux de fibres creuses (10a), le deuxième groupe d'écheveaux de fibres creuses (10b) et le troisième groupe d'écheveaux de fibres creuses (10c) sont tressés les uns aux autres.

6. Faisceau de fibres creuses selon l'une des revendications 3 à 5,
**caractérisé en ce que**

le tressage constitue une structure régulière eu égard aux écheveaux de fibres creuses (10a, 10b, 10c).

7. Faisceau de fibres creuses selon l'une des revendications précédentes,
**caractérisé en ce que**

le premier groupe d'écheveaux de fibres creuses (10a) et le deuxième groupe d'écheveaux de fibres creuses (10b) sont prévus pour un échange de matière et le troisième groupe d'écheveaux de fibres creuses (10c) est prévu pour un échange de chaleur.

8. Faisceau de fibres creuses selon l'une des revendications précédentes,
**caractérisé en ce que**

le premier groupe d'écheveaux de fibres creuses (10a) et le deuxième groupe d'écheveaux de fibres creuses (10b) constituent, essentiellement le long de la direction préférentielle du troisième groupe d'écheveaux de fibres creuses (10c), un canal ou plusieurs canaux (20).

9. Faisceau de fibres creuses selon l'une des revendications précédentes,
**caractérisé en ce que**

les fibres creuses (11) d'au moins un écheveau de fibres creuses (10a, 10b, 10c) sont positionnées au moins par zones par les trous d'un ou de plusieurs disques à trous (31).

10. Dispositif d'échange de matière comprenant au moins un faisceau de fibres creuses,
**caractérisé en ce que**

au moins un faisceau de fibres creuses (1) est constitué conformément à l'une des revendications précédentes.

11. Procédé de fabrication d'un faisceau de fibres creuses (1) selon l'une des revendications précédentes, **caractérisé par** les étapes suivantes :

- mise à disposition d'au moins une pluralité de fibres creuses (11) qui sont constituées pour un échange de matière ou un échange de matière et de chaleur ;
- agencement d'au moins une pluralité de ces fibres creuses (11) dans au moins un écheveau de fibres creuses (10a, 10b, 10c) par tressage.

Fig. 1

Fig. 2

EP 2 470 291 B1

Fig. 3

Fig. 4

14

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0621047 B1
- EP 1360984 A2
- JP 2002833 A
- DE 2426591 A1
- CA 1094462 A1